(19) **Europäisches Patentamt**
**European Patent Office**
**Office européen des brevets**

(11)  **EP 1 819 189 B1**

(12)  **EUROPÄISCHE PATENTSCHRIFT**

(45) Veröffentlichungstag und Bekanntmachung des Hinweises auf die Patenterteilung:
**01.07.2009  Patentblatt 2009/27**

(51) Int Cl.:
***H04W 4/00*** *(2009.01)*

(21) Anmeldenummer: **07100715.7**

(22) Anmeldetag: **18.01.2007**

(54) **Verfahren zur Steuerung eines Statuswechsels eines Endgerätes in einem Funk-Kommunikationssystem**

Method for controlling the status change of a terminal device in a radio communication system

Procédé destiné à la commande d'un changement de statut d'un terminal dans un système de communication radio

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.02.2006  EP 06002562**
**19.09.2006  EP 06019606**

(43) Veröffentlichungstag der Anmeldung:
**15.08.2007  Patentblatt 2007/33**

(73) Patentinhaber: **Nokia Siemens Networks GmbH & Co. KG**
**81541 München (DE)**

(72) Erfinder:
• **Unteregger, Burghard**
**1040 Wien (AT)**
• **Wimmer, Markus**
**50-316 Wroclaw (PL)**

(56) Entgegenhaltungen:
**US-A1- 2005 250 504**

• **"Universal Mobile Telecommunications System (UMTS); Radio Resource Control (RRC) protocol specification (3GPP TS 25.331 version 6.8.0 Release 6)" ETSI TS 125 331 V6.8.0 (2005-12), 1. Dezember 2005 (2005-12-01), Seiten 1-375, XP002388831**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung eines Statuswechsels eines Endgerätes in einem Funk-Kommunikationssystem.

In Funk-Kommunikationssystemen der so genannten dritten Generation (3G), insbesondere dem UMTS (Universal Mobile Telecommunications System), welches durch die 3GPP (3rd Generation Partnership Project) standardisiert wird, sind verschiedene Protokollstati bzw. -modi, in denen sich ein Endgerät befinden kann, vorgesehen. Zwischen diesen Stati bzw. Modi kann, beispielsweise gesteuert durch das Netzwerk, gewechselt werden. Gemäß dem 3GPP-UMTS-Standard werden die einzelnen Stati bzw. Modi sowie die Übergänge zwischen ihnen in der technischen Spezifikation TS 25.331, V6.8.0, (2005-12), "Radio Resource Control; Protocol Specification", in beispielsweise dem Kapitel 7 beschrieben.

Neben dem so genannten Idle Mode, bei dem sich das Endgerät in einem Ruhezustand befindet und keine aktive Kommunikation mit dem Netzwerk betreibt, existieren verschiedene Ausprägungen des so genannten Verbindungsmodus (engl. Connected Mode) des Endgerätes. Bekannte Stati des Verbindungsmodus des UMTS-Standards sind beispielsweise der so genannte Cell_DCH- (DCH: Dedicated Channel), beschrieben in Kapitel 7.2.2.3 der TS 25.331, sowie der Cell-FACH-Status (FACH: Forward Access Channel), beschrieben in Kapitel 7.2.2.2 der TS 25.331, zwischen denen, gesteuert durch eine Funknetzsteuerung (engl. RNC - Radio Network Controller) gewechselt werden kann. Dieser netzgesteuerte Wechsel ist auch unter dem Begriff Channel Type Switching bekannt.

Die Möglichkeit des Endgerätes, einen Statuswechsel durchzuführen, kann dabei von einem vorherigen vollständigen Empfang bestimmter so genannter Systeminformationsblöcke (engl. SIB - System Information Block), welche von Basisstationen in Rundsendekanälen (engl. BCH - Broadcast Channel) ausgesendet werden, abhängig sein. Derartige Systeminformationsblöcke 1 bis 18 werden nach der TS 25.331 in den Kapiteln 8.1.1.1.1 sowie 8.1.1.6.1 bis 8.1.1.6.18, spezifiziert.

Insbesondere ist in dem Kapitel 8.1.1.1.2 der TS 25.331 angegeben, dass ein Endgerät (engl. UE - User Equipment) die Systeminformationsblöcke 11 und gegebenenfalls 12 lesen und auswerten muss, bevor das Endgerät so genannte Funkressourcenkontrollnachrichten (engl. RRC - Radio Resource Control message) in einem physikalischen zufallsgesteuerten Zugriffskanal PRACH (Physical Random Access Channel) in Aufwärtsrichtung zu einer Basisstation senden kann. Diese Systeminformationsblöcke 11 und 12 beinhalten insbesondere Informationen zu Nachbarfunkzellen, welche von dem Endgerät in Vorbereitung einer möglichen Verbindungsweiterschaltung (engl. Handover) bezüglich funktechnischer Eigenschaften beobachtet und daraus abgeleitete Informationen zu der aktuell das Endgerät versorgenden Basisstation signalisiert werden sollen.

Dies hat beispielsweise zur Konsequenz, dass das Endgerät bei einem Statuswechsel von Cell_DCH auf Cell_FACH ein vollständiges Systeminformationselement 11 (Kapitel 8.1.1.6.11, 10.2.48.8.14 der TS 25.331) sowie gegebenenfalls 12 (Kapitel 8.1.1.6.12, 10.2.48.8.15 der TS 25.331) lesen muss, bevor es eine so genannte Physical-Channel-Reconfiguration-Complete- oder Cell-Update-Nachricht als Funkressourcenkontrollnachricht in dem PRACH zu der Basisstation senden kann. Bei einer Länge beispielsweise des Systeminformationselementes 11 von bis zu 16 Segmenten mit jeweils bis zu 222 bits hätte dies eine Verzögerung von bis zu 320ms, zuzüglich bis zu vier Aussendungen von MIBs (Master Information Block) mit jeweils 20ms, sodass eine Gesamtverzögerung von bis zu 400ms bis zur Aussendung beispielsweise einer Cell-Update-Nachricht durch das Endgerät entstehen würde.

Zur Verkürzung dieser nachteiligen Verzögerung ist es denkbar, dass für einen Wechsel des Kanaltyps ein Lesen nur bestimmter Systeminformationsblöcke von dem Endgerät erforderlich ist, währenddessen andere Blöcke erst nach einer Signalisierung der Funkressourcenkontrollnachricht in dem Zugriffskanal PRACH von dem Endgerät gelesen werden. Hierzu sind beispielsweise der MIB sowie die Systeminformationsblöcke 1, 3, 4, 5 und 7 geeignet, die mit einer vergleichsweise hohen Periodizität auf dem Rundsendekanal übertragen werden können, wodurch eine maximale Gesamtverzögerung von ca. 100ms bis zur ersten Aussendung durch das Endgerät nach einem Wechsel des Kanaltyps erzielt werden kann. Die Systeminformationsblöcke 11 und ggf. 12 würden hingegen von dem Endgerät erst nach dieser ersten Aussendung in Aufwärtsrichtung gelesen werden.

Sofern jedoch sowohl in dem Endgerät als auch in der Funknetzsteuerung die Kenntnis, dass ein verzögertes Lesen der Systeminformationen 11 und ggf. 12 von dem jeweils anderen unterstützt wird, nicht konsistent vorhanden ist, kann nachteilig beispielsweise folgende Situation auftreten.

Es sei angenommen, dass kurze Zeit nach Aussenden einer Physical-Channel-Reconfiguration-Nachricht zu dem Endgerät die Funknetzsteuerung bestimmt, dass ein Wechsel des Endgerätes zurück in den Cell_DCH-Status umgehend erforderlich ist, beispielsweise aufgrund einer steigenden Übertragungslast in Abwärtsrichtung zu diesem Endgerät, Beschränkungen der Kapazität des FACH, Messberichts 4a des Endgerätes o.ä. In diesem Fall kann es zu dem geforderten weiteren Wechsel des Status in dem Endgerät und Aussenden der Physical-Channel-Reconfiguration-Complete-Nachricht vor einem Beenden des vollständigen Lesens der Systeminformationen 11 und ggf. 12 in Folge des ersten Statuswechsels kommen. In Ermangelung der Informationen der Systeminformationen 11 und ggf. 12 liegen dem Endgerät beispielsweise keine vollständigen Konfigurationsinformationen für durchzuführende Messungen von Nachbarfunkzellen vor, währenddessen die Funknetzsteuerung davon ausgeht, dass diese dem Endgerät bekannt sind. Als Folge ist das Endgerät beispielsweise nicht in der Lage, Informationen bzw. Messberichte (engl. measurement report) entsprechend den Vorgaben der Funknetzsteuerung zu liefern, wodurch eine Verbindungsübergabe des Endgerätes ggf. nicht bzw. nicht rechtzeitig durchgeführt werden kann und es folglich zu einem Verbindungsabbruch kommt.

In gleicher Weise erwartet beispielsweise die Funknetzsteuerung eine periodische Übertragung von Messberichten nach einem Wechsel des Endgerätes in den Cell FACH-Status. Mittels des Informationselementes periodic reporting criteria in dem Systeminformationsblock 11 kann die Funknetzsteuerung beispielsweise definieren, mit welcher Periodizität - 250ms, 500ms, 1000ms etc. - das Endgerät Messberichte aussenden soll. Kommt es nun zu einem verzögerten Lesen des Systeminformationsblocks 11 und ggf. 12, so wird auch das Aussenden der Messberichte durch das Endgerät zumindest um die entsprechende Zeit verzögert. Eine Funknetzsteuerung, welche nicht in Kenntnis des verzögerten Lesens des Endgerätes ist und den umgehenden Beginn der Aussendungen durch das Engerät erwartet, könnte ein Ausbleiben der Messberichte als Fehlverhalten des Endgerätes interpretieren und die Verbindung auslösen.

Der Erfindung liegt die Aufgabe zugrunde, ein Verfahren sowie Komponenten eines Funk-Kommunikationssystems anzugeben, die einen beschleunigten Wechsel des Kanalstatus eines Endgerätes ermöglichen. Diese Aufgabe wird durch die Merkmale des Verfahrens, des Systems, der Funknetzsteuerung sowie des Endgerätes gelöst. Vorteilhafte Ausgestaltungen der Erfindung sind abhängigen Patentansprüchen zu entnehmen.

Die Erfindung wird nachfolgend anhand eines Ausführungsbeispiels näher dargestellt. Dabei zeigen

FIG 1    ein Blockschaltbild eines Funk-Kommunikationssystems basierend auf dem UMTS-Standard,
FIG 2    ein Ablaufdiagramm eines Statuswechsels nach dem Stand der Technik,
FIG 3    ein Ablaufdiagramm eines Statuswechsels nach einer möglichen Ausgestaltung,
FIG 4    ein Ablaufdiagramm eines Statuswechsels nach dem erfindungsgemäßen Verfahren, und
FIG 5    ein Ablaufdiagramm nach FIG 4 mit einer zusätzlichen Berücksichtigung von Offset-Parametern.

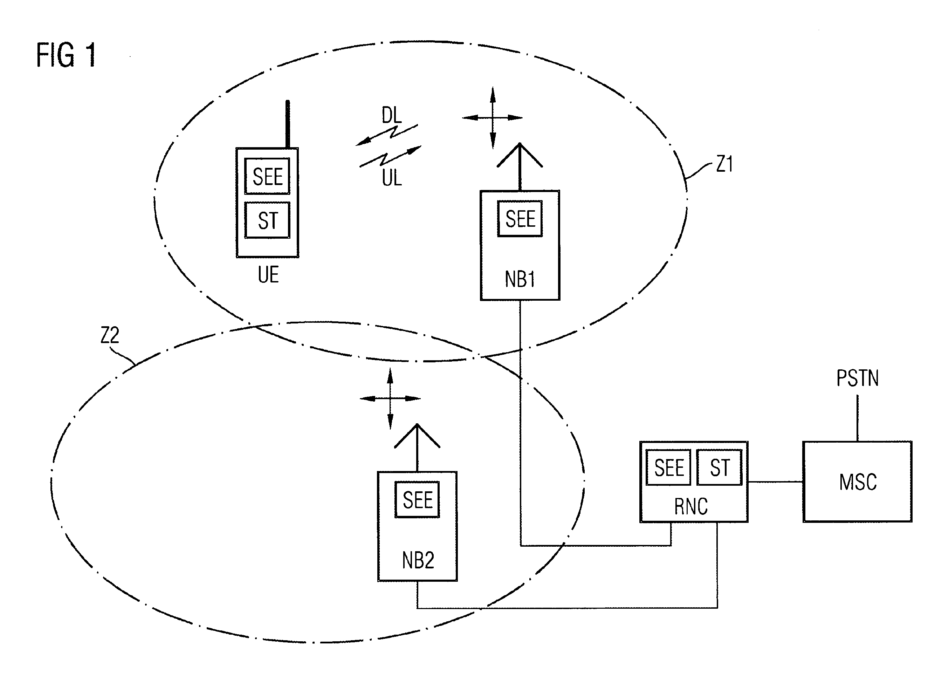

In der FIG 1 ist beispielhaft eine vereinfachte Struktur eines Funk-Kommunikationssystems nach dem bekannten UMTS- Standard dargestellt, wobei eine Realisierung des erfindungsgemäßen Verfahrens in Funk-Kommunikationssystemen nach anderen Standards in gleicher Weise möglich ist.

Die Struktur eines Funk-Kommunikationssystems nach dem UMTS-Standard besteht aus einer oder mehreren Mobilvermittlungsstelle MSC (Mobile Switching Center), welche eine Vermittlung von so genannten leitungsvermittelte Verbindungen (engl. Circuit Switched) sowie eine Verwaltung von verschiedenen Funktionalitäten des Systems durchführen. Die Mobilvermittlungsstelle MSC übernimmt zudem die Funktion des Übergangs zu dem öffentlichen Telefonnetz PSTN (Public Switched Telephone Network). Neben der Mobilvermittlungsstelle existieren nicht dargestellte so genannte Gateways, SGSN bzw. GGSN, welche einen Übergang in Netzwerke mit paketorientierter Übertragung, beispielsweise dem Internet, ermöglichen.

An die Mobilvermittlungsstelle MSC bzw. Gateways sind eine Vielzahl von Funknetzsteuerungen RNC (Radio Network Controller) angeschlossen, in denen unter anderem physikalische Ressourcen der Funkschnittstelle verwaltet werden. An eine Funknetzsteuerung RNC sind wiederum eine Vielzahl von Basisstationen NB1, NB2 (Node B) angeschlossen, welche unter Nutzung von zugewiesenen physikalischen Ressourcen der Funkschnittstelle Verbindungen zu Endgeräten UE (User Terminal) aufbauen und auslösen können. Jede Basisstation NB1, NB2 versorgt mit den zugeteilten physikalischen Ressourcen jeweils mindestens ein geographisches Gebiet, welches auch als Funkzelle Z1, Z2 bezeichnet wird. Die Übertragung auf der Funkschnittstelle erfolgt sowohl in Aufwärts- UL (Uplink) als auch in Abwärtsrichtung DL (Downlink). Sowohl die Basisstationen NB1, NB2 als auch Endgeräte UE weisen jeweils Sende/Empfangseinrichtungen SEE für die Signalübertragung auf der Funkschnittstelle auf. Weiterhin weist auch die Funknetzsteuerung eine Sende-/Empfangseinrichtung SEE für einen Austausch von Daten und Signalisierungen mit den Basisstationen sowie der Mobilvermittlungsstelle bzw. Gateways auf. Das Endgerät UE sowie die Funknetzsteuerung RNC weisen zudem jeweils eine Steuereinrichtung ST auf, mit der das erfindungsgemäße Verfahren, wie es nachfolgend beschrieben wird, durchgeführt werden kann.

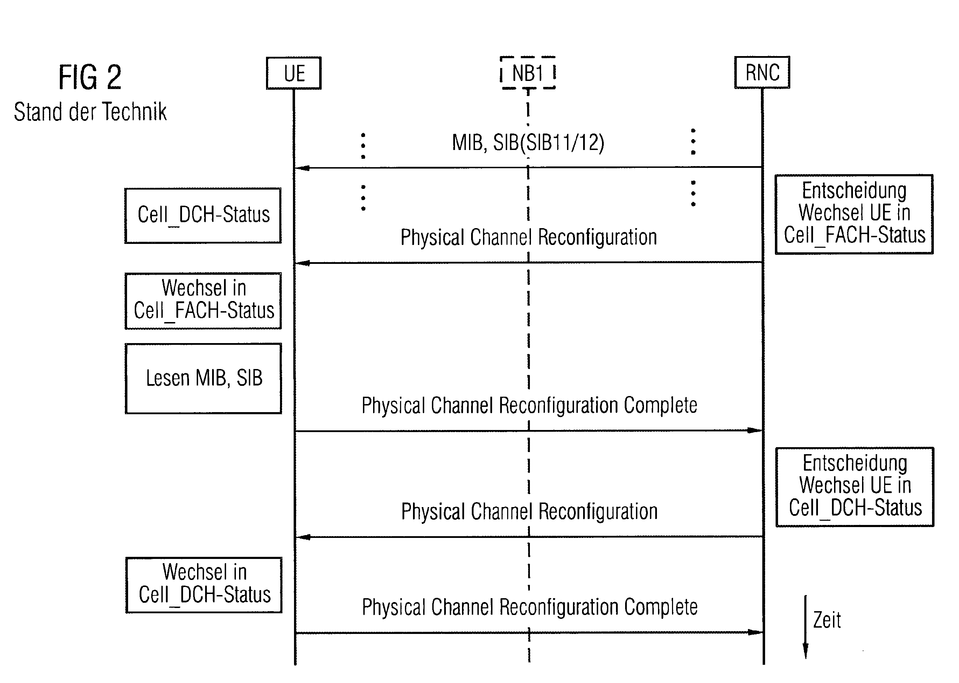

In der FIG 2 ist beispielhaft ein Verfahren nach dem einleitend beschriebenen Stand der Technik, wie es unter anderem der einleitend genannten TS 25.331 entnehmbar ist, in Form eines Ablaufdiagramms dargestellt. Da es sich hierbei um einen Austausch von Nachrichten auf höheren Schichten bzw. in logischen Kanälen handelt, ist die erste Basisstation NB1 bis auf die Übertragung der Nachrichten in den physikalischen Kanälen auf der Funkschnittstelle zu dem Endgerät UE nicht direkt in dem Nachrichtenfluss involviert und daher nur gestrichelt dargestellt.

Nach dem Beispiel der FIG 2 sendet die Funknetzsteuerung RNC periodisch in einem Rundsendekanal der ersten Basisstation NB1 sowohl Master Information Blöcke MIB als auch eine Anzahl von Systeminformationsblöcken SIB, wobei die einzelnen Systeminformationsblöcke mit ggf. unterschiedlichen Periodizitäten ausgesendet werden. Obwohl in der FIG 2 sowie nachfolgenden Figuren lediglich eine beispielhafte Übertragung dieser Informationen in dem Rundsendekanal dargestellt sind, ist es selbstverständlich, dass während des gesamten Zeitraumes des Ablaufdiagramms wiederholte Übertragungen dieser Informationen entsprechend ihrer jeweiligen Periodizität erfolgen.

Es sei angenommen, dass sich das Endgerät UE zunächst in dem so genannten Cell_DCH-Status befindet, in welchem es keine bzw. nur eine begrenzte Anzahl von Systeminformationsblöcken liest. Entscheidet nun die Funknetzsteuerung, beispielsweise aufgrund einer steigenden Übertragungslast in Abwärtsrichtung zu diesem Endgerät, Beschränkungen der Kapazität des FACH, oder Empfang des Messberichts 4a von dem Endgerät, dass das Endgerät UE in den so genannten Cell_FACH-Status wechseln soll, so sendet die Funknetzsteuerung RNC eine Rekonfigurationsnachricht Physical Channel Reconfiguration zu dem Endgerät, welche dieses veranlasst, einen Wechsel in den Cell_FACH-Status durchzuführen. Nach dem Kapitel 8.1.1.1.2 der TS 25.331 muss das Endgerät UE vor Aussendung einer Bestätigungsnachricht Physical Channel Reconfiguration Complete des Statuswechsels in einem zufallsgesteuerten Zugriffskanal zu der Funknetzsteuerung RNC sowohl den so genannten Master Information Block MIB als auch die betreffenden Systeminformationsblöcke SIB, einschließlich des vergleichsweise langen Systeminformationsblocks 11 und ggf. 12, vollständig gelesen haben, um entsprechend den darin angegebenen Konfigurationsinformationen zu arbeiten. Die bedeutet, wie einleitend dargestellt, dass diese Bestätigung unter Umständen erst mit einer Verzögerung von bis zu mehreren hundert Millisekunden übertragen wird.

Für einen nochmaligen Wechsel des Status des Endgerätes UE von Cell_FACH zu Cell_DCH erfolgt erneut eine Aussendung einer Rekonfigurationsnachricht Physical Channel Reconfiguration durch die Funknetzsteuerung RNC zu dem Endgerät UE, wodurch dieses in Folge den Status wechselt und wiederum eine entsprechende Bestätigungsnachricht Physical Channel Reconfiguration Complete zu der Funknetzsteuerung RNC in dem zufallsgesteuerten Zugriffskanal überträgt. Da das Endgerät in dem Cell_DCH-Status zumindest die vergleichsweise langen Systeminformationsblöcke 11 und ggf. 12 nicht liest, kommt es bei diesem Wechsel bzw. dessen Bestätigung nicht zu nachteiligen Verzögerungen.

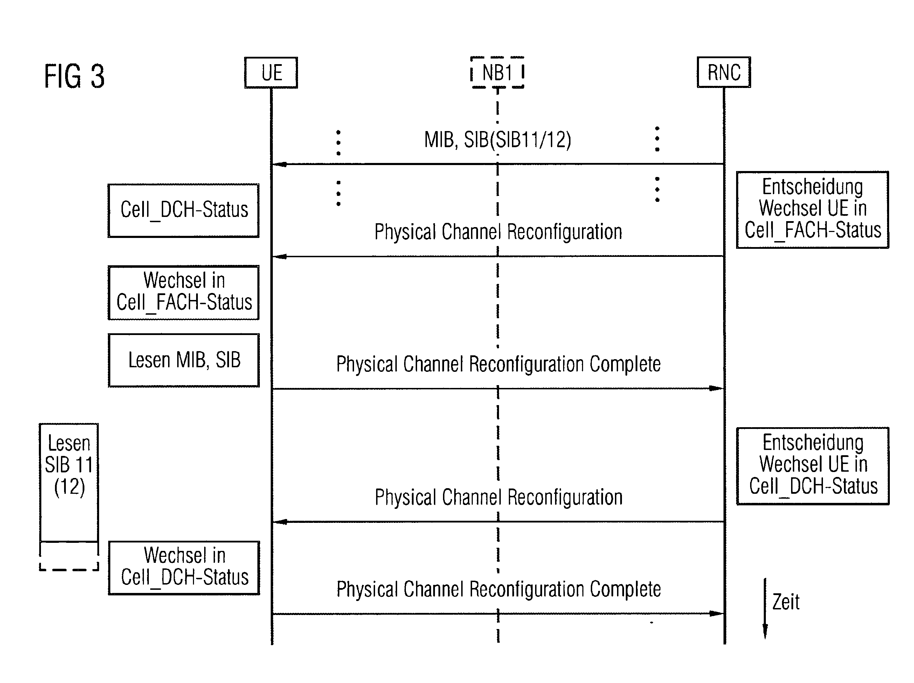

Ein zur Verkürzung nachteilig auftretender Verzögerungen beim Statuswechsel von Cell_DCH zu Cell_FACH denkbarer Ansatz, gemäß dem die Bestätigungsnachricht von dem Endgerät UE bereits vor einem vollständigen Lesen aller relevanten Systeminformationsblöcke, insbesondere dem Systeminformationsblock 11 und ggf. 12, zu der Funknetzsteuerung übertragen wird, ist in der FIG 3 beispielhaft dargestellt. Entsprechend dem Beispiel der FIG 2 befindet sich das Endgerät zunächst in dem Cell_DCH-Status, und die Funknetzsteuerung RNC entscheidet, dass das Endgerät UE in den Cell_FACH-Status wechseln soll. Die Funknetzsteuerung RNC sendet daraufhin eine Rekonfigurationsnachricht Physical Channel Reconfiguration in Abwärtsrichtung zu dem Endgerät UE. Dieses wechselt nach Empfang der Nachricht in den Cell_FACH-Status und sendet, beispielsweise bereits nach erfolgtem Lesen des MIB sowie den SIB 1, 3, 4, 5 und 7, die Bestätigungsnachricht Physical Channel Reconfiguration Complete zu der Funknetzsteuerung RNC. Wie beispielhaft in der FIG 3 dargestellt, setzt das Endgerät UE auch nach Aussenden der Bestätigungsnachricht den Empfang des Systeminformationsblocks 11 und ggf. 12 fort.

Entscheidet nun während des fortgesetzten Lesens des SIB 11 und ggf. 12 die Funknetzsteuerung RNC erneut, dass ein Statuswechsel des Endgerätes UE erfolgen soll, und veranlasst sie dies wiederum durch Senden einer Rekonfigurationsnachricht Physical Channel Reconfiguration, so wird das Endgerät UE diesen Statuswechsel ausführen und entsprechend der Funknetzsteuerung RNC bestätigen. Diesen Wechsel zurück in den Cell_DCH-Status führt das Endgerät UE auch aus, wenn es den SIB 11 und ggf. 12 noch nicht vollständig gelesen hat, so wie in der FIG 3 beispielhaft durch die den gestrichelt fortgesetzen Block dargestellt. In dem Cell_DCH-Status setzt das Endgerät UE jedoch das Lesen der SIB 11 und ggf. 12 bzw. weiterer SIB nicht fort, sodass es keine vollständigen Informationen hierzu vorliegen hat. Hierdurch kommt es zu den einleitend beschriebenen Inkonsistenzen zwischen den in dem Endgerät UE vorliegenden Informationen des SIB 11 und ggf. 12 und der Annahme der Funknetzsteuerung RNC, dass das Endgerät UE die Informationen des SIB 11 und ggf. 12 bereits vollständig empfangen hat, mit gegebenenfalls der Folge eines Verbindungsabbruchs aufgrund nicht erwarteten Verhaltens des Endgerätes UE.

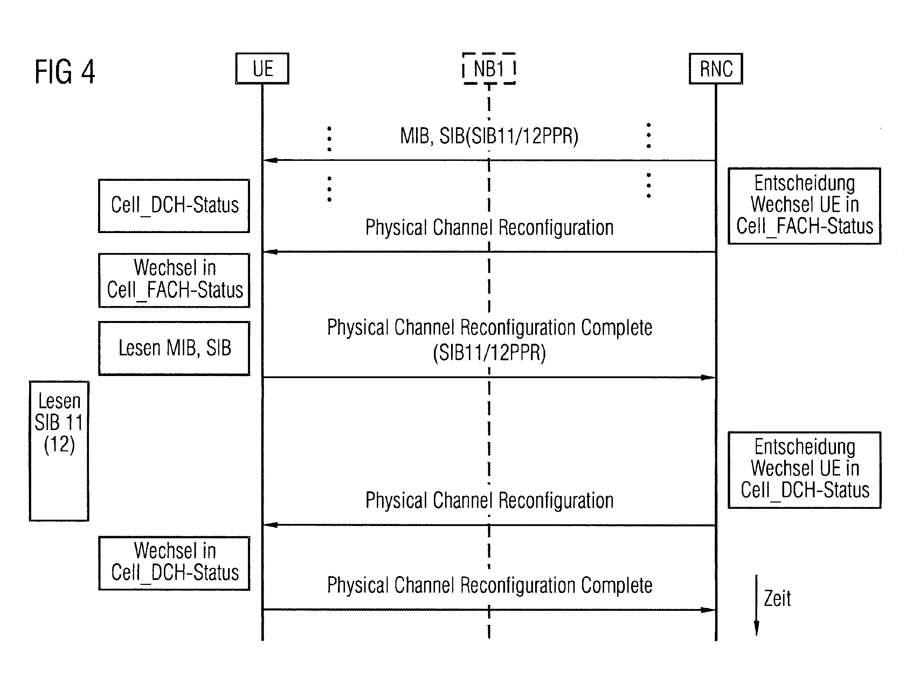

In der FIG 4 ist ein Ablaufdiagramm mit weiteren Merkmalen dargestellt. Ergänzend zu den bekannten Informationsblöcken MIB, SIB sowie ggf. weiteren Informationen wird erfindungsgemäß in dem Rundsendekanal eine Information darüber gesendet, dass ein oder mehrere Informationsblöcke, insbesondere die Systeminformationsblöcke 11 und ggf. 12, von Endgeräten verzögert gelesen werden können. Diese Information SIB11/12PPR (SIB 11 and/or 12 Postponed Reading) kann dabei als ein gesondertes Informationselement eines Systeminformationsblocks SIB, beispielsweise des mit einer vergleichsweise hohen Periodizität ausgesendeten SIB 5, des Master-Informationsblocks MIB oder auch als ein gesonderter Systeminformationsblock, gesendet werden. Insbesondere kann die Information dabei als ein Statusanzeiger (engl. flag) verwirklicht sein, d.h. durch Setzen eines speziellen Bits wird signalisiert, ob das Merkmal des verzögerten Lesens unterstützt wird oder nicht. Alternativ oder ergänzend hierzu ist gleichsam eine Übertragung dieser Informationen bzw. des Statusanzeigers als Ergänzung der Rekonfigurationsnachricht Physical Channel Reconfiguration denkbar, auch wenn dies nicht in der FIG 4 dargestellt ist.

Nach Empfang der Rekonfigurationsnachricht Physical Channel Reconfiguration wechselt das Endgerät UE von dem aktuellen Cell_DCH-Status in den Cell_FACH-Status und beginnt mit dem Lesen der Informationsblöcke MIB, SIB in dem Rundesendekanal der ersten Basisstation NB1. Mit diesen Informationsblöcken erhält das Endgerät UE auch die Kenntnis der Unterstützung der verzögerten Lesbarkeit bestimmter Systeminformationsblöcke, in dem Beispiel die Systeminformationsblöcke 11 und ggf. 12. Nach erfolgtem Lesen beispielsweise des MIB sowie der SIB 1, 3, 4, 5 sowie 7 sendet das Endgerät UE eine Bestätigungsnachricht Physical Channel Reconfiguration Complete zu der Funknetzsteuerung RNC. Die Funknetzsteuerung RNC ist im Gegensatz zu dem Beispiel der FIG 2 in Kenntnis der Tatsache, dass das Endgerät UE zum Zeitpunkt der Aussendung der Bestätigungsnachricht Physical Channel Reconfiguration Complete die Systeminformationsblöcke 11 und ggf. 12 noch nicht vollständig gelesen hat. Da sie zudem in Kenntnis der Länge sowie der Periodizität dieser Systeminformationsblöcke ist und somit den Zeitbedarf des Endgerätes UE zum Lesen dieser Informationen abschätzen kann, wird die Funknetzsteuerung RNC die Aussendung einer weiteren Rekonfigurationsnachricht Physical Channel Reconfiguration für einen Statuswechsel des Endgerätes UE von Cell_FACH zu Cell_DCH solange verzögern, bis die betreffenden Systeminformationsblöcke vollständig von dem Endgerät UE gelesen werden konnten.

Zusätzlich oder auch alternativ zu einer vorstehend beschriebenen Aussendung von Informationen bzw. eines Statusanzeigers bezüglich einer Unterstützung eines verzögerten Lesens bestimmter Informationsblöcke in dem Rundsendekanals durch die Funknetzsteuerung RNC kann in gleicher Weise eine Aussendung von entsprechenden Informationen durch das Endgerät erfolgen, wobei die Struktur sowie der Inhalt der Informationen nicht identisch zu den von der Funknetzsteuerung gesendeten Informationen sein müssen. Wie in der FIG 4 dargestellt, wird hierzu beispielsweise die Bestätigungsnachricht Physical Channel Reconfiguration Complete durch Informationen bzw. einen Statusanzeiger SIB11/12PPR ergänzt, mit denen das Endgerät UE der Funknetzsteuerung RNC mitteilt, dass es bestimmte Informationsblöcke, beispielsweise wiederum die Systeminformationsblöcke 11 und ggf. 12, verzögert liest. Diese ergänzenden Informationen bzw. Statusanzeiger können dabei bei jeder Aussendung einer Bestätigungsnachricht Physical Channel Reconfiguration Complete, einer so genannten RRC-Connection-Setup-Complete-Nachricht sowie beispielsweise auch einer so genannten Funkzellenaktualisierungsnachricht (engl. Cell Update), oder auch nur nach einem Wechsel in einen Status, beispielsweise den Cell_FACH-Status, in dem derartige Informationsblöcke gelesen werden müssen, von dem Endgerät UE zu der Funknetzsteuerung RNC gesendet werden.

Auch mittels dieser Information des Endgerätes UE ist die Funknetzsteuerung RNC in der Lage, eine erneute Rekonfiguration des Endgerätes UE zeitlich derart zu steuern, dass das Endgerät UE in jedem Fall in der Lage ist, die verzögert gelesenen Informationsblöcke vor einem Statuswechsel vollständig vollständig lesen und umsetzen zu können.

Sofern die Situation auftritt, dass die Funknetzsteuerung RNC das Endgerät UE vor einem Beenden des Lesens beispielsweise der Systeminformationsblöcke 11 und ggf. 12 mit der Rekonfigurationsnachricht Physical Channel Reconfiguration anweist, einen Wechsel in den Cell DCH-Status durchzuführen, kann das Endgerät UE mittels einer Bestätigungsnachricht Physical Channel Reconfiguration Complete, ergänzt um die Informationen bzw. den Statusanzeiger, dass das Endgerät UE ein verzögertes Lesen bestimmter Systeminformationsblöcke durchführt, dem RNC signalisieren, dass es die gesamten Systeminformationen noch nicht vollständig gelesen und ggf. verarbeitet hat. Auf diese Situation kann die Funknetzsteuerung RNC beispielsweise derart reagieren, dass sie beispielsweise die vollständigen Messkonfigurationsinformationen, wie sie beispielsweise in den Systeminformationsblöcken 11 und ggf. 12 enthalten sind, mittels, ggf. erweiterter, Messsteuerungsnachrichten zu dem Endgerät UE überträgt.

Eine weitere beispielhafte Situation, in der eine erfindungsgemäße Signalisierung des verzögerten Lesens bestimmter Systeminformationsblöcke vorteilhaft einsetzbar ist, tritt auf, wenn die Funknetzsteuerung RNC nach einem Wechsel des Endgerätes UE in den Cell_FACH-Status eine so genannte Messsteuerungsnachricht (engl. Measurement Control) zu dem Endgerät UE sendet. In diesem Fall würde das Endgerät UE, sofern es die Systeminformationsblöcke nicht bereits vollständig gelesen hat, eine so genannte Messstörungsnachricht (engl. Measurement Failure) zu der Funknetzsteuerung RNC zurücksenden, einschließlich erfindungsgemäßer Informationen bzw. eines Statusanzeigers, welche der Funknetzsteuerung RNC ein verzögertes Lesen bestimmter Systeminformationsblöcke signalisieren. Aus diesen Informationen bzw. dem Statusanzeiger kann die Funknetzsteuerung RNC ableiten, dass das Endgerät UE aufgrund des noch nicht erfolgten Beendens des Lesens der Systeminformationsblöcke noch nicht in der Lage ist, die Messsteuerungsnachricht umzusetzen, anstatt nach dem Stand der Technik von einer Fehlfunktion des Endgerätes UE auszugehen. Die Funknetzsteuerung RNC wird als Konsequenz aus der Signalisierung des Endgerätes UE beispielsweise die Messsteuerungsnachricht zu einem späteren Zeitpunkt erneut aussenden.

Ein weiterer Aspekt der Signalisierung durch das Endgerät UE kann darin liegen, dass das Endgerät UE hierdurch der Funknetzsteuerung RNC mitteilt, welche Systeminformationsblöcke bzw. Teile davon es bereits gelesen und/oder welche es nachfolgend noch lesen wird. Dies kann beispielsweise mittels einer Erweiterung des vorstehend genannten Statusanzeigers zu einem so genannten Bitmap erfolgen, mit dem spezifische Informationen signalisierbar sind. Dies kann einerseits vorteilhaft dazu dienen, dass der Funknetzsteuerung der aktuelle Status des Endgerätes bezüglich gespeicherter Messsteuerungsinformationen bekannt ist, andererseits sind derart spezifische Informationen sinnvoll, wenn beispielsweise ein Systeminformationsblock eine große Menge Informationen aufweist, das Endgerät jedoch nur einen Teil der Informationen lesen muss.

Die wachsende Anzahl unterschiedlicher Funk-Kommunikationssysteme bzw. Systemausprägungen führt beispielsweise dazu, dass insbesondere die Systeminformationsblöcke 11 und 12 eine immer größer werdende Menge Informationen zu Nachbarfunkzellen bzw. -systemen und deren Messsteuerungsinformationen enthalten müssen. Nach dem aktuellen Standard TS 25.331 können diese Systeminformationsblöcke beispielsweise Informationen von bis zu 96 Nachbarfunkzellen, aufgeteilt in 32 Intrafrequenz-, 32 Interfrequenz- und 32 Inter-Funkzugriffstechnologie- (RAT - Radio Access Technologie)-Funkzellen, beinhalten. Da jedoch selbst diese Mengen Informationen für eine große Anzahl parallel existierender Systeme und -ausprägungen nicht ausreichend sein werden, ist eine Erhöhung der Kapazität solcher Systeminformationsblöcke mittels einer Einführung von Erweiterungen sinnvoll. Dies kann sowohl in Form einer einzigen Erweiterung mit beispielsweise 16 Segmenten, als auch in Form einer Mehrzahl einzelner Erweiterungen mit einer jeweiligen Anzahl von Segmenten verwirklicht werden.

Eine Aufteilung der Segmente kann vorteilhaft beispielsweise nach Funkübertragungsstandards erfolgen, d.h. eine erste Erweiterung enthält Informationen zu Nachbarfunkzellen des GSM-Standards (Global System for Mobile Communication), währenddessen eine zweite Erweiterung Informationen zu Nachbarfunkzellen des UMTS-Standards und eine dritte Erweiterung Informationen zu Nachbarfunkzellen des IEEE 802.16 WiMAX-Standards (Worldwide Interoperability for Microwave Access) enthalten, etc. Eine Signalisierung, welche Erweiterungen beispielsweise des Systeminformationsblocks 11 und ggf. 12 existieren sowie einen Hinweis darauf, welche Art Informationen diese enthalten, kann mittels einer Erweiterung eines mit einer hohen Periodizität ausgesendeten Systeminformationsblocks, beispielsweise des SIB 5, verwirklicht werden. Die Erweiterungen können zudem beispielsweise mit einer zu dem bekannten Systeminformationsblock unterschiedlichen Periodizität ausgesendet werden, wobei auch die jeweilige Periodizität der Erweiterungen abhängig von bestimmten Parametern, beispielsweise der Fähigkeit, Verbindungsweiterschaltungen (engl. Handover) zu unterstützen, oder der unterstützten maximalen Geschwindigkeit von Endgeräten, dimensioniert werden kann.

Ein Endgerät, welches beispielsweise nur die Funkübertragungsstandards GSM und UMTS unterstützt, kann entsprechend von einem Lesen der Erweiterung mit Informationen zu Nachbarfunkzellen des WiMAX-Standards sowie ggf. weiteren existierenden Standards absehen. Mittels den vorstehend beschriebenen Informationen bzw. eines Bitmaps signalisiert das Endgerät folglich der Funknetzsteuerung, welche Erweiterungen bzw. Teile der Erweiterung es gelesen hat bzw. nachfolgend lesen wird, sodass die Funknetzsteuerung einerseits in Kenntnis der dem Endgerät verfügbaren Informationen sowie ihrer Fähigkeit der Unterstützung bestimmter Funkübertragungsstandards ist, andererseits auf Basis dieser Informationen abschätzen kann, welcher Zeitraum von dem Endgerät noch zum Lesen der Informationen noch benötigt wird.

Endgeräte, die die erfindungsgemäße Signalisierung des verzögerten Lesens bestimmter Systeminformationsblöcke nicht unterstützen, werden die diesbezüglichen Aussendungen der Funknetzsteuerungen ignorieren und entsprechend dem zu FIG 2 beschriebenen Stand der Technik weiterhin eine Bestätigungsnachricht erst nach vollständigem Lesen aller erforderlichen Systeminformationsblöcken zu der Funknetzsteuerung senden.

Nach einem weiteren, auch unabhängig von den vorstehend beschriebenen Verfahren realisierbaren erfindungsgemäßen Verfahren, wird eine Lösung der potenziell auftretenden Situation, dass trotz eines zunächst von dem Endgerät aufgrund von Messungen und Evaluierungen einer Funkzelle entschiedenen Zugriffs auf die Basisstation dieser Funkzelle und damit auch der Verwendung des verzögerten Lesens beispielsweise der Systeminformationsblöcke SIB 11 und ggf. SIB 12 es unmittelbar nach dem Zugriff, beispielsweise aufgrund einer Bewegung des Endgerätes, zu einer Verschlechterung der Übertragungsbedingungen zu dem Netzwerk kommt und damit der Verbindungsaufbau nicht abgeschlossen und die vollständigen Informationen der SIB 11 und ggf. SIB 12 von dem Endgerät nicht gelesen werden. Aufgrund des verzögerten Lesens von Informationen über Nachbarfunkzellen in dem Systeminformationsblock SIB 11, aus denen das Endgerät dann unmittelbar eine alternative Funkzelle bzw. Basisstation für einen erneuten Zugriff auswählen könnte, wäre das Endgerät in diesem Fall nicht in der Lage, einen derartigen alternativen Zugriff unmittelbar auszuführen. Vielmehr wäre in diesem Fall erforderlich, dass das Endgerät eine neue Funkzellauswahl, d.h. eine so genannte Initial Cell Selection, durchführt. Das Endgeräte müsste, gegebenenfalls ohne jegliche Vorkenntnisse der umliegenden Funkzellen bzw. Basisstationen, entsprechend nochmals Messungen von Funkkanälen durchführen und eine neue geeignete Funkzelle auswählen. Hierdurch wird jedoch nachteilig der Aufbau der Verbindung deutlich verzögert.

Insbesondere in Kapitel 5.2.3 der Technischen Spezifikation 3GPP TS 25.304 V6.8.0 (2005-12), "User Equipment (UE) procedures in idle mode and procedures for cell reselection in connected mode", (Release 6), wird dieser so genannte Funkzellauswahlprozess (engl. Cell Selection Process) beschrieben. In Kapitel 5.2.3.1.2 dieser Spezifikation werden dabei so genannte Funkzellauswahlkriterien (engl. Cell Selection Criteria) Squal und Srxlev für den UMTS-FDD-Modus spezifiziert, anhand derer das Endgerät eine Entscheidung über eine Auswahl einer Funkzelle und einen nachfolgenden Zugriff trifft.

Nach diesem Kapitel wird von dem Engerät beispielsweise eine Funkzelle, welche eine Übertragung nach dem UMTS-FDD-Modus unterstützt, ausgewählt bzw. wiederausgewählt, wenn sowohl ein Parameter Srxlev (Cell Selection RX level value, in dB) als auch ein Parameter Squal (Cell Selection quality value, in dB), welche beispielsweise in den Systeminformationsblöcken SIB 3 und SIB 4 von einer Basisstation rundgesendet werden, von dem Endgerät als größer 0 bestimmt werden. Diese Parameter bestimmen sich dabei wie folgt:

$$Squal = Qqualmeas - Qqualmin$$

$$Srxlev = Qrxlevmeas - Qrxlevmin - Pcompensation$$

mit Qqualmeas dem von dem Endgerät gemessene Qualitätswert der Funkzelle, Qqualmin einem vorgegebenen minimalen Qualitätswert, Qrxlevmeas dem von dem Endgerät gemessenen Empfangsstärkewert, Qrxlevmin einem vorgegebenen minimalen Empfangsstärkewert und Pcompensation einem Wert, der mögliche unterschiedliche Klassen von Endgeräten, insbesondere der maximalen Sendeleistung des Endgerätes, berücksichtigt.

Nach oben beschriebenem Beispiel kann nun der Fall auftreten, dass ein Endgerät Messungen einer Funkzelle durchführt und bei Erfüllen der Kriterien Squal und Srxlev einen Zugriff auf diese Funkzelle durchführt. Dieser Zugriff durch das Endgerät erfolgt, beispielsweise aufgrund einer Signalisierung der Unterstützung des verzögerten Lesens bestimmter Systeminformationsblöcke durch die Basisstation der Funkzelle bzw. der zugeordneten Funknetzsteuerung, ohne dass es zuvor den vollständigen Inhalt beispielsweise des Systeminformationsblocks SIB 11 und ggf. SIB 12 gelesen hat. Für den Fall, dass sich nach Zugriff auf die Funkzelle und noch nicht abgeschlossenem Lesen der Systeminformationsblöcke SIB 11 und ggf. SIB 12 die Übertragungsbedingungen zu der ausgewählten Funkzelle verschlechtern, kann das Lesen dieser Informationen vor einem Abbruch der Verbindung nicht beendet werden und es kommt entsprechend zu einer zeitlichen Verzögerung des Verbindungsaufbaus.

Erfindungsgemäß wird eine Parametrisierung der Auswahlkriterien durchgeführt, um eine Wahrscheinlichkeit des Eintretens einer solchen Situation zu verringern. Diese Parametrisierung kann beispielsweise mittels einer Signalisierung eines oder mehrerer so genannter Versatz-Werte, nachfolgend als Offset-Werte Offsetqual und Offsetrxlev bezeichnet, zu dem Endgerät erfolgen, welche von dem Endgerät zusätzlich berücksichtigt werden müssen. Die parametrisierten Werte müssen dabei nicht unbedingt für die eigentliche Auswahl einer Funkzelle und einem nachfolgenden Zugriff verwendet werden, sondern können auch allein für die Steuerung des verzögerten Lesens von Systeminformationen bzw. Systeminformationsblöcken berücksichtigt werden, d.h. unabhängig von dem standardgemäßen Verfahren zur Funkzellauswahl bzw. Funkzellwiederauswahl.

Beispielsweise wird durch diese Offset-Werte dem Endgerät signalisiert, dass dieses ein verzögertes Lesen von beispielsweise den Systeminformationsblöcken SIB 11 und ggf. SIB 12 nur dann durchführen soll, wenn das Kriterium Squal größer 2 und Srxlev größer 1 ist, d.h. wenn Squal - Offsetqual > 0 bzw. Srxlev - Offsetrxlev > 0 ist, im Gegensatz zu den vorstehend genannten Squal- bzw. Srxlev-Werten größer 0 für die Erfüllung der Kriterien. Diese Werte werden beispielsweise von der Funknetzsteuerung wie die Kriterien Squal und Srxlev in den Systeminformationsblöcken SIB 3 und/oder SIB 4 signalisiert. Definiert werden die ein oder mehreren Offset-Werte beispielsweise seitens des Betreibers des Systems, welchem die Funkzelle zugeordnet ist.

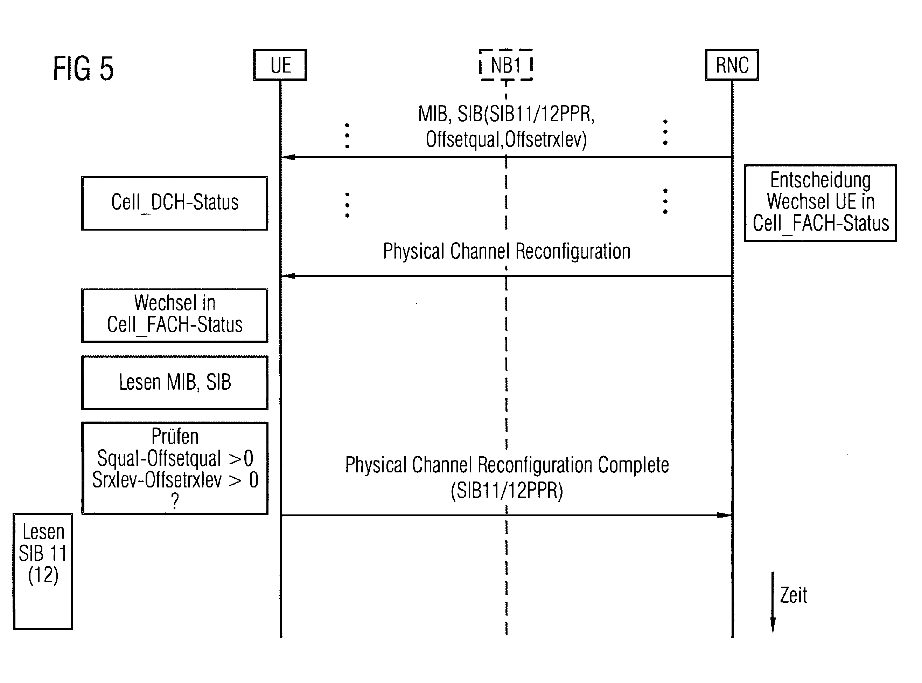

In der FIG 5 ist dieses Verfahren nochmals beispielhaft dargestellt. Seitens der Funknetzsteuerung werden in einem oder mehreren Systeminformationsblöcken SIB neben der Sinalisierung der Unterstützung des verzögerten Lesens von Systeminformationsblöcken SIB11/12PPR auch oben genannte Offset-Parameter Offsetqual und Offsetrxlev signalisiert. Diese werden von dem Endgerät UE gelesen, welches anschließend prüft, ob die Funkzelle der Basisstation NB1 unter Berücksichtigung dieser Parametrisierung die Kriterien für eine Eignung für ein Durchführen des verzögerten Lesens der Systeminformationsblöcke SIB 11 und ggf. SIB 12 erfüllt. Erfüllt die Funkzelle der Basisstation NB1 die Kriterien, so signalisiert das Endgerät UE der Funknetzsteuerung RNC entsprechend den Ausführungen zu FIG 4, dass die Rekonfiguration abgeschlossen wurde und ein verzögertes Lesen der Systeminformationsblöcke seitens des Endgerätes UE durchgeführt wird. Führt die Prüfung jedoch nicht zur Erfüllung der Kriterien (in der FIG 5 nicht dargestellt), so bestätigt das Endgerät UE den Abschluss der Rekonfiguration erst nach einem vollständigen Lesen der Systeminformationsblöcke SIB 11 und ggf. SIB 12, d.h. ein verzögertes Lesen dieser Systeminformationsblöcke wird seitens des Endgerätes UE in diesem Fall nicht durchgeführt.

Alternativ zu einer Signalisierung von zwei Offset-Parametern beispielsweise für eine Berücksichtigung bei der Entscheidung über ein verzögertes Lesen von Systeminformationsblöcken, welche den Kriterien Squal und Srxlev zugeordnet sind, kann auch lediglich ein einziger Offset-Wert signalisiert werden. Welchem Kriterium dieser signalisierte Offset-Wert zugeordnet ist, ist dabei beispielsweise fest in der Standardspezifikation vorgegeben oder wird dem Endgerät zusätzlich zu dem Offset-Wert in einem Systeminformationsblock signalisiert. Wird hingegen kein spezifischer Offset-Wert signalisiert, werden die aktuellen Werte des Standards für die Entscheidung, ob verzögertes Lesen durchgeführt wird oder nicht, von dem Endgerät verwendet.

Die Offset-Werte können beispielsweise entsprechend den Werten für Qqualmin und Qrxlevmin signalisiert werden, welche in Kapitel 10.3.2.3 der Technischen Spezifikation TS 25.331 V6.8.0 (2005-12), "Radio Resource Control (RRC); Protocol Specification", (Release 6), angegeben sind. Diese werden als ganze Zahlen (engl. Integer) signalisiert, welche einem jeweiligen Wert in dB bzw. dBm entsprechen.

Die bezugnehmend auf FIG 1 beschriebenen Komponenten des Funk-Kommunikationssystems, insbesondere das Endgerät UE sowie die Funknetzsteuerung RNC als in dem erfindungsgemäßen Verfahren involvierte Komponenten, weisen jeweils zumindest eine Sende-/Empfangseinrichtung SEE auf, mittels denen vorstehend erläuterte Informationen, Nachrichten bzw. Statusanzeiger gesendet und empfangen werden können. Weiterhin sind in diesen Komponenten Steuereinrichtungen ST vorgesehen, die ein Einfügen der erfindungsgemäßen Informationen bzw. Statusanzeiger bezüglich eines verzögerten Lesens aller oder bestimmter Systeminformationen in bekannte Nachrichten bzw. Signalisierungen durchführen.

**Patentansprüche**

1. Verfahren zur Steuerung eines Statuswechsels eines Endgerätes (UE) in einem Funk-Kommunikationssystem, bei dem
eine Funknetzsteuerung (RNC) des Funk-Kommunikationssystems in einem Kanal eine Mehrzahl Informatiortsblöcke (MIB,SIB) periodisch aussendet,
die Funknetzsteuerung (RNC) eine Nachricht bezüglich eines Wechsels des Endgerätes (UE) von einem ersten Status (Cell_FACH) zu einem zweiten Status (Cell_DCH) zu dem Endgerät (UE) sendet,
**gekennzeichnet dadurch, dass**
die Funknetzsteuerung (RNC) mittels einer zweiten Information dem Endgerät (UE) signalisiert, dass vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss.

2. Verfahren nach Anspruch 1, bei dem
das Endgerät (UE) bei Bestätigung des erfolgten Wechsels von dem ersten Status (Cell_FACH) zu dem zweiten Status (Cell_DCH) mittels einer ersten Information der Funknetzsteuerung (RNC) signalisiert, dass die Mehrzahl Informationsblöcke (MIB,SIB) nicht vollständig gelesen wurde.

3. Verfahren nach einem vorstehenden Anspruch, bei dem
die erste und/oder zweite Information in Form eines Statusanzeigers oder eines Bitmaps übertragen wird.

4. Verfahren nach einem vorstehenden Anspruch, bei dem
die erste und/oder zweite Information als ein Systeminformationsblock (SIB) oder als ein Informationselement eines Systeminformationsblocks (SIB), als ein Master-Informationsblock (MIB), als eine Rekonfigurationsnachricht (Physical Channel Reconfiguration) und/oder als eine Rekonfigurationsbestätigungsnachricht (Physical Channel Reconfiguration Complete) übertragen wird.

5. Verfahren nach Anspruch 1 oder 2, bei dem
die zweite Information in einem Rundsendekanal einer Basisstation (NB1) des Funk-Kommunikationssystems übertragen wird.

6. Verfahren nach einem vorstehenden Anspruch, bei dem
die Mehrzahl Informationsblöcke (MIB,SIB) in einem Rundsendekanal übertragen wird.

7. Verfahren nach Anspruch 2, bei dem
das Endgerät (UE) mittels der ersten Information der Funknetzsteuerung (RNC) signalisiert, welchen zumindest einen der Mehrzahl Znformationsblöcke (SIB,MIB) und/oder Erweiterungen des zumindest einen Informationsblocks von dem Endgerät (UE) gelesen wurde bzw. gelesen wird oder nicht gelesen wurde bzw. gelesen wird.

8. Endgerät (UE), aufweisend zumindest
eine Sende-/Empfangseinrichtung (SEE) zum Empfangen einer in einem Kanal von einer Funknetzsteuerung (RNC) eines Funk-Kommunikationssystems periodisch ausgesendeten Mehrzahl von Informationsblöcken (MIB,SIB) und zum Empfangen einer Nachricht zur Steuerung eines Wechsels von einem ersten Status (Cell_FACH) zu einem zweiten Status (Cell_DCH) und zum Senden einer Bestätigung des erfolgten Wechsels, und
eine Steuereinrichtung (ST)
zum Steuern des Sendens der Bestätigung des erfolgten Wechsels zu der Funknetzsteuerung (RNC) durch die Sende-/Empfangseinrichtung (SEE)
**dadurch gekennzeichnet, dass**
das Senden der Bestätigung vor dem vollständigen Lesen der Mehrzahl Informationsblöcke (MIB,SIB) erfolgt.

9. Funknetzsteuerung (RNC) eines Funk-Kommunikationssystems, aufweisend zumindest
eine Sende-/Empfangseinrichtung (SEE) zum periodischen Aussenden einer Mehrzahl Informationsblöcke (MIB, SIB) in einem Kanal, sowie zum Senden einer Nachricht zu einem Endgerät (UE) zum Steuern eines Wechsels des Endgerätes (UE) von einem ersten Status (Cell_FACH) zu einem zweiten Status (Cell_DCH),
**gekennzeichnet durch**
eine Steuereinrichtung (MIB,SIB) zum Steuern einer Signalisierung einer zweiten Information, nach der vor einer Bestätigung des erfolgten Wechsels von dem ersten Status (Cell_FACH) zu dem zweiten Status (Cell_DCH) **durch** das Endgerät (UE) die Mehrzahl Informationsblöcke (MIB,SIB) nicht vollständig gelesen werden muss, **durch** die Sende-/Empfangseinrichtung (SEE).

10. Funk-Kommunikationssystem, bestehend aus zumindest einer Funknetzsteuerung (RNC) sowie zumindest einem Endgerät (UE),
wobei die Funknetzsteuerung (RNC) aufweist zumindest
eine Sende-/Empfangseinrichtung (SEE) zum periodischen Aussenden einer Mehrzahl Informationsblöcke (MIB, SIB) in einem Kanal, sowie zum Senden einer Nachricht zu einem Endgerät (UE) zum Steuern eines Wechsels des Endgerätes (UE) von einem ersten Status (Cell_FACH) zu einem zweiten Status (Cell_DCH), und
eine Steuereinrichtung (MIB,STB) zum Steuern einer Signalisierung einer zweiten Information, nach der vor einer Bestätigung des erfolgten Wechsels von dem ersten Status (Cell__FACH) zu dem zweiten Status (Cell_DCH) durch das Endgerät (UE) die Mehrzahl Informationsblöcke (MIB,SZB) nicht vollständig gelesen werden muss, durch die Sende-/Empfangseinrichtung (SEE),
und wobei das Endgerät (UE) aufweist zumindest
eine Sende-/Empfangseinrichtung (SEE) zum Empfangen der von der Funknetzsteuerung (RNC) periodisch ausgesendeten Mehrzahl Informationsblöcke (MIB,SIB) und der Nachricht zur Steuerung des Wechsels von dem ersten Status (Cell_FACH) zu dem zweiten Status (Cell_DCH), und
eine Steuereinrichtung (ST) zum Steuern des Wechsels von dem ersten Status (Cell_FACH) zu dem zweiten Status (Cell_DCH).

11. Funk-Kommunikationssystem nach Anspruch 10, bei dem das Endgerät (UE) aufweist zumindest
eine Steuereinrichtung (ST) zum Steuern einer Signalisierung des nicht vollständigen Lesens der Mehrzahl Informationsblöcke (MIB,SIB) mittels einer ersten Information bei einem Senden einer Bestätigung des erfolgten Wechsels von dem ersten Status (Cell_FACH) zu dem zweiten Status (Cell_DCH) zu der Funknetzsteuerung (RNC) durch die Sende-/Empfangseinrichtung (SEE).

**Claims**

1. Method for controlling a status change of a terminal (UE) in a radio communication system, in which a radio network controller (RNC) of the radio communication system periodically sends out a plurality of information blocks (MIB, SIB) in a channel,
the radio network controller (RNC) sends a message relating to a change of the terminal (UE) from a first status (Cell_FACH) to a second status (Cell_DCH) to the terminal,
**characterized in that**
the radio network controller (RNC) signals the terminal (UE) by means of a second information item that the plurality of information blocks (MIB, SIB) does not have to be read completely before a confirmation of the completed change from the first status (Cell_FACH) to the second status (Cell_DCH) by the terminal (UE).

2. Method according to Claim 1, in which
the terminal (UE), on confirmation of the completed change from the first status (Cell_FACH) to the second status (Cell_DCH), signals by means of a first information item for the radio network controller (RNC) that the plurality of information blocks (MIB, SIB) has not been completely read.

3. Method according to a preceding claim, in which
the first and/or second information item is transmitted in the form of a status flag or a bitmap.

4. Method according to a preceding claim, in which
the first and/or second information item is transmitted as a system information block (SIB) or an information element of a system information block (SIB), as a master information block (MIB), as a reconfiguration message (Physical Channel Reconfiguration) and/or as a reconfiguration confirmation message (Physical Channel Reconfiguration Complete).

5. Method according to Claim 1 or 2, in which
the second information item is transmitted in a broadcast channel of a base station (NB1) of the radio communication system.

6. Method according to a preceding claim, in which
the plurality of information blocks (MIB, SIB) is transmitted in a broadcast channel.

7. Method according to Claim 2, in which
the terminal (UE) signals to the radio network controller (RNC) by means of the first information item which at least one of the plurality of information blocks (SIB, MIB) and/or extensions of the at least one information block has been read or is being read or has not been read or is not being read by the terminal (UE).

8. Terminal (UE) having at least
one transmitting/receiving device (SEE) for receiving a plurality, sent out periodically in a channel by a radio network controller (RNC) of a radio communication system, of information blocks (MIB, SIB) and for receiving a message for controlling a change from a first status (Cell_FACH) to a second status (Cell_DCH) and for sending a confirmation of the completed change, and
a control device (ST) for controlling the sending of the confirmation of the completed change to the radio network controller (RNC) by the transmitting/receiving device (SEE),
**characterized in that**
the sending of the confirmation is carried out before the completed reading of the plurality of information blocks (MIB, SIB).

9. Radio network controller (RNC) of a radio communication system, having at least
one transmitting/receiving device (SEE) for periodically sending out a plurality of information blocks (MIB, SIB) in a channel, and for sending a message to a terminal (UE) for controlling a change of the terminal (UE) from a first status (Cell_FACH) to a second status (Cell_DCH)
**characterized by**
a control device (ST) for controlling a signaling of a second information item according to which, before a confirmation of the completed change from the first status (Cell_FACH) to the second status (Cell_DCH) by the terminal (UE), the plurality of information blocks (MIB, SIB) does not need to be read completely, by the transmitting/receiving device (SEE).

10. Radio communication system consisting of at least one radio network controller (RNC) and at least one terminal (UE), wherein the radio network controller (RNC) has at least
one transmitting/receiving device (SEE) for periodically sending out a plurality of information blocks (MIB, SIB) in a channel, and for sending a message to a terminal (UE) for controlling a change of the terminal (UE) from a first status (Cell_FACH) to a second status (Cell_DCH), and
a control device (MIB,SIB) for controlling a signaling of a second information item according to which, before a confirmation of the completed change from the first status (Cell_FACH) to the second status (Cell_DCH) by the terminal (UE), the plurality of information blocks (MIB, SIB) does not need to be read completely, by the transmitting/ receiving device (SEE),
and where the terminal (UE) has at least one transmitting/receiving device (SEE) for receiving the plurality of information blocks (MIB, SIB) sent out periodically by the radio network controller (RNC) and the message for controlling the change from the first status (Cell_FACH) to the second status (Cell_DCH), and
a control device (ST) for controlling the change from the first status (Cell_FACH) to the second status (Cell_DCH).

11. Radio communication system according to Claim 10, in which the terminal (UE) has at least
one control device (ST) for controlling a signaling of the incomplete reading of the plurality of information blocks (MIB, SIB) by means of a first information item in the sending of a confirmation of the completed change from the first status (Cell_FACH) to the second status (Cell_DCH) to the radio network controller (RNC) by the transmitting/ receiving device (SEE).

**Revendications**

1. Procédé de contrôle / commande d'un changement de statut d'un terminal (UE) dans un système de radiocommunication, dans lequel
   un contrôleur de réseau radio (RNC) du système de radiocommunication émet périodiquement une pluralité de blocs d'information (MIB, SIB) dans un canal,
   le contrôleur de réseau radio (RNC) envoie au terminal (UE) un message relatif à un passage du terminal (UE) d'un premier statut (Cell_FACH) à un deuxième statut (Cell_DCH)
   **caractérisé en ce que**
   le contrôleur de réseau radio (RNC) signale au terminal (UE), au moyen d'une deuxième information, que la pluralité de blocs d'information (MIB, SIB) n'a pas besoin d'être entièrement lue par le terminal (UE) avant une confirmation que le passage du premier statut (Cell_FACH) au deuxième statut (Cell_DCH) a eu lieu.

2. Procédé selon la revendication 1, dans lequel
   le terminal (UE), à la confirmation que le passage du premier statut (Cell_FACH) au deuxième statut (Cell_DCH) a eu lieu, signale au contrôleur de réseau radio (RNC), au moyen d'une première information, que la pluralité de blocs d'information (MIB, SIB) n'a pas été entièrement lue.

3. Procédé selon une revendication précédente, dans lequel
   la première et/ou la deuxième information sont transmises sous la forme d'un indicateur de statut ou d'un bitmap.

4. Procédé selon une revendication précédente, dans lequel
   la première et/ou la deuxième information sont transmises sous la forme d'un bloc d'information système (SIB) ou sous la forme d'un élément d'information d'un bloc d'information système (SIB), sous la forme d'un bloc d'information maître (MIB), sous la forme d'un message de reconfiguration (Physical Channel Reconfiguration) et/ou sous la forme d'un message de confirmation de reconfiguration (Physical Channel Reconfiguration Complete).

5. Procédé selon la revendication 1 ou 2, dans lequel la deuxième information est transmise dans un canal de diffusion d'une station de base (NB1) du système de radiocommunication.

6. Procédé selon une revendication précédente, dans lequel la pluralité de blocs d'information (MIB, SIB) est transmise dans un canal de diffusion.

7. Procédé selon la revendication 2, dans lequel le terminal (UE) signale, au moyen de la première information du contrôleur de réseau radio (RNC), quel au moins un de la pluralité de blocs d'information (SIB, MIB) et/ou d'élargissements de l'au moins un bloc d'information a été resp. est lu ou n'a pas été resp. n'est pas lu par le terminal (UE).

8. Terminal (UE), comportant au moins
   un dispositif émetteur / récepteur (SEE) pour recevoir une pluralité de blocs d'information (MIB, SIB) émise périodiquement dans un canal par un contrôleur de réseau radio (RMC) d'un système de radiocommunication et pour recevoir un message de contrôle / commande d'un passage d'un premier statut (Cell_FACH) à un deuxième statut (Cell_DCH) et pour émettre une confirmation que le changement a eu lieu, et
   un dispositif de contrôle / commande (ST) pour la commande de l'envoi de la confirmation que le changement a eu lieu au contrôleur de réseau radio (RNC) par le dispositif émetteur / récepteur (SEE),
   **caractérisé en ce que**
   l'émission de la confirmation a lieu avant la lecture complète de la pluralité de blocs d'information (MIB, SIB).

9. Contrôleur de réseau radio (RNC) d'un système de radiocommunication, comportant au moins un dispositif émetteur / récepteur (SEE) pour émettre périodiquement une pluralité de blocs d'information (MIB, SIB) dans un canal ainsi que pour envoyer un message à un terminal (UE) pour commander un passage du terminal (UE) d'un premier statut (Cell_FACH) à un deuxième statut (Cell_DCH),
   **caractérisée par**
   un dispositif de contrôle / commande (MIB, SIB) pour la commande d'une signalisation, par le dispositif émetteur / récepteur (SEE), d'une deuxième information selon laquelle la pluralité de blocs d'information (MIB, SIB) n'a pas besoin d'être lue entièrement par le terminal (UE) avant une confirmation que le passage du premier statut (Cell_FACH) au deuxième statut (Cell_DCH) a eu lieu.

10. Système de radiocommunication, composé d'au moins un contrôleur de réseau radio (RNC) et d'au moins un terminal (UE), le contrôleur de réseau radio (RNC) comportant au moins un dispositif émetteur / récepteur (SEE) pour émettre périodiquement une pluralité de blocs d'information (MIB, SIB) dans un canal ainsi que pour envoyer un message à un terminal (UE) pour commander un passage du terminal (UE) d'un premier statut (Cell_FACH) à un deuxième statut (Cell_DCH) et

un dispositif de contrôle / commande (MIB, SIB) pour la commande d'une signalisation, par le dispositif émetteur / récepteur (SEE), d'une deuxième information selon laquelle la pluralité de blocs d'information (MIB, SIB) n'a pas besoin d'être lue entièrement par le terminal (UE) avant une confirmation que le passage du premier statut (Cell_FACH) au deuxième statut (Cell_DCH) a eu lieu et

le terminal (UE) comportant au moins

un dispositif émetteur / récepteur (SEE) pour recevoir la pluralité de blocs d'information (MIB, SIB) émise périodiquement par le contrôleur de réseau radio (RNC) et le message de contrôle / commande du passage du premier statut (Cell_FACH) au deuxième statut (Cell_DCH) et

un dispositif de contrôle / commande (ST) pour commander le passage du premier statut (Cell_FACH) au deuxième statut (Cell_DCH).

11. Système de radiocommunication selon la revendication 10, dans lequel le terminal (UE) comporte au moins un dispositif de contrôle / commande (ST) pour commander une signalisation de la lecture non complète de la pluralité de blocs d'information (MIB, SIB) au moyen d'une première information lors d'un envoi au contrôleur de réseau radio (RNC), par le dispositif émetteur / récepteur (SEE), d'une confirmation que le passage du premier statut (Cell_FACH) au deuxième statut (Cell_DCH) a eu lieu.

FIG 1

## FIG 2
Stand der Technik

UE  NB1  RNC

MIB, SIB(SIB11/12)

Entscheidung
Wechsel UE in
Cell_FACH-Status

Cell_DCH-Status

Physical Channel Reconfiguration

Wechsel in
Cell_FACH-Status

Lesen MIB, SIB

Physical Channel Reconfiguration Complete

Entscheidung
Wechsel UE in
Cell_DCH-Status

Physical Channel Reconfiguration

Wechsel in
Cell_DCH-Status

Physical Channel Reconfiguration Complete

Zeit

EP 1 819 189 B1

FIG 3

RNC

Entscheidung Wechsel UE in Cell_FACH-Status

Entscheidung Wechsel UE in Cell_DCH-Status

Zeit

NB1

MIB, SIB(SIB11/12)

Physical Channel Reconfiguration

Physical Channel Reconfiguration Complete

Physical Channel Reconfiguration

Physical Channel Reconfiguration Complete

UE

Cell_DCH-Status

Wechsel in Cell_FACH-Status

Lesen MIB, SIB

Wechsel in Cell_DCH-Status

Lesen SIB 11 (12)

# FIG 4

EP 1 819 189 B1

## FIG 5

```
              ┌────┐            ┌╌╌╌╌┐                      ┌─────┐
              │ UE │            ╎ NB1╎                      │ RNC │
              └────┘            └╌╌╌╌┘                      └─────┘
                 │                 ╎                           │
                 │         MIB, SIB(SIB11/12PPR,              │
                 │    ⋮    Offsetqual,Offsetrxlev)    ⋮       │
                 │◄────────────────────────────────────────── │
  ┌──────────────────┐       ╎                          ┌─────────────────┐
  │ Cell_DCH-Status  │   ⋮   ╎                    ⋮     │   Entscheidung  │
  │                  │       ╎                          │   Wechsel UE in │
  └──────────────────┘       ╎                          │ Cell_FACH-Status│
                 │           ╎                          └─────────────────┘
                 │    Physical Channel Reconfiguration      │
                 │◄────────────────────────────────────────── │
  ┌──────────────────┐       ╎                              │
  │   Wechsel in     │       ╎                              │
  │ Cell_FACH-Status │       ╎                              │
  └──────────────────┘       ╎                              │
                 │           ╎                              │
  ┌──────────────────┐       ╎                              │
  │  Lesen MIB, SIB  │       ╎                              │
  └──────────────────┘       ╎                              │
                 │           ╎                              │
  ┌──────────────────┐       ╎                              │
  │      Prüfen      │       ╎                              │
  │ Squal-Offsetqual >0      Physical Channel Reconfiguration Complete
  │ Srxlev-Offsetrxlev > 0        (SIB11/12PPR)             │
  │        ?         │       ╎                              │
  └──────────────────┘ ──────────────────────────────────►│
┌──────┐     │             ╎                              │
│Lesen │     │             ╎                              │
│SIB 11│     │             ╎                              │
│ (12) │     │             ╎                              │ Zeit
└──────┘     │             ╎                              │  │
                                                             ▼
```

Prüfen
Squal-Offsetqual $> 0$
Srxlev-Offsetrxlev $> 0$
?

EP 1 819 189 B1